# EUROPEAN PATENT SPECIFICATION

(11) **EP 2 597 595 B1**
(45) Date of publication and mention of the grant of the patent: **14.09.2016**
(21) Application number: 11306547.8
(22) Date of filing: 24.11.2011
(51) Int. Cl.: G06K 7/00, G06K 7/10, H01Q 1/22, H01Q 9/00, G06K 17/00

(54) **Multiplexer system and method for selecting an antenna in a pre-cabled module embedding patch antennas for furniture**
Multiplexer-System und Verfahren zur Auswahl einer Antenne in einem vorverkabelten Modul mit eingebetteten Patch-Antennen für Möbel
Système multiplexeur et procédé pour sélectionner une antenne dans des antennes patch intégrant un module précâblé pour meubles

(43) Date of publication of application: 29.05.2013
(73) Proprietor: HMY Group, 89470 Moneteau (FR)
(72) Inventor: Lognon, Laurent, 89000 SAINT GEORGES SUR BAULCHE (FR)
(74) Representative: Santarelli

(56) References cited:
- GB-A- 2 469 343
- US-A- 5 821 902
- US-A1- 2009 027 202
- US-A1- 2009 207 022

## Description

The present invention relates generally to RFID systems and more specifically to a multiplexer system and a method for selecting an antenna in a pre-cabled module embedding patch antennas for furniture.

Thanks to the low cost of passive RFID tags (Radio Frequency Identification tags), RFID systems are used in many different applications including, in particular, retail applications for managing inventory. In such applications, an RFID reader comprising an antenna interrogates RFID tags located in the vicinity of the reader's antenna.

The kind of information returned by an RFID tag depends on its type. However, regarding retail applications, the data read in an RFID tag generally relates to the identification of the item associated with the RFID tag. Such identification may comprise an identifier of the item, a description of the item, an identifier of the manufacturer of the item, and the like. One of the main advantages of the use of RFID technology over other technologies like barcode technology lies in its capacity to interrogate several tags simultaneously that may not be in direct line of sight of the reader.

However, although the use of RFID tags may present numerous advantages over traditional technologies, there remain some drawbacks. In particular, RFID readers are generally expensive and the communication range allowing communication between a reader and a low cost RFID tag is limited.

To cope with such problems, several antennas are generally connected to a single RFID reader via a multiplexer which is used to select the antenna to be used. The antennas used for retail applications are typically patch antennas that is to say planar resonant antennas for narrow-band microwave wireless links that require semi-hemispherical coverage. They are often used as elements for an array. It is noted that most of retail applications are based upon UHF (*Ultra High Frequency*) RFID tags whose signal frequency is comprised between 860 and 960 MHz.

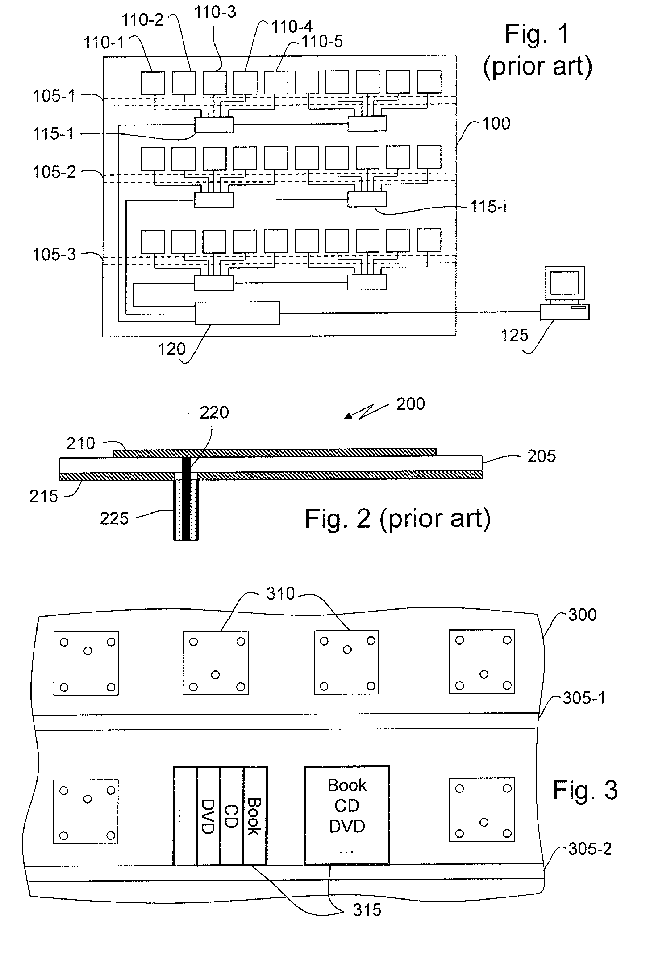

Figure 1 illustrates schematically a back view of a back panel 100 of a shelving structure comprising horizontal shelves 105-1 to 105-3 for CDs, DVDs, books, or the like. As shown, back panel 100 includes an RFID infrastructure. More precisely, back panel 100 comprises several arrays of antennas, each array of antennas being associated with one multiplexer allowing the selection of an antenna in the array. For example, each of the antennas 110-1 to 110-5 is connected to the multiplexer 115-1. Similarly, antennas are connected to the multiplexer 115-I, as shown.

The multiplexers to which antennas are connected, for example multiplexers 115-1 and 115-i, are themselves connected to another multiplexer 120. In turn, multiplexer 120 is connected to a computer 125, for example a personal computer. Accordingly, the computer 125 can select and activate one antenna amongst all the antennas of the back panel 100 by controlling paths established by the multiplexers. The activation of an antenna allows electronic tags located in its vicinity to be read. For the sake of illustration, the activation of antenna 110-3 allows access to the information stored in the electronic tags attached to the items located in front of the antenna 110-3 (in front of the back panel 100) on the horizontal shelf 105-1.

As mentioned above, in view of the advantages they provide over other antennas, for example in terms of weight, cost, and ease of integration, patch antennas are often used for retail applications. As shown in Figure 2, representing schematically a cross sectional view of a patch antenna, a patch antenna (200) comprises a dielectric substrate (205) arranged in between an antenna radiation electrode (210, radiation element) and a ground electrode (215, ground conductor). A feeding pin or probe feed (220) connected to the antenna radiation electrode is used to feed the radio frequency (RF) signal to be emitted and/or to receive an RF signal. The received RF signal or the RF signal to be emitted is transmitted between the antenna and a reader (not represented) thanks to a feed line 225, for example a coaxial cable.

The antennas and the multiplexers are typically glued, screwed, or fixed by equivalent means on the back panel. The electrical connexions between the antennas and the multiplexers are generally established by cables, for example coaxial cable, adapted to convey RF signals received from electronic tags through the antennas. Accordingly, when retail furniture embedding an RFID infrastructure is to be installed, it is necessary to connect cables for establishing electrical links, which is time consuming and a potential source of troubles.

To reduce the time required for installing such a type of furniture, arrays of identified antennas connected to a multiplexer can be provided on a single printed circuit board (PCB). Accordingly, in such an implementation, only one electrical connexion between each printed circuit board and a shared multiplexer is required. However, such a solution is expensive.

US 2009/0207022 which is regarded as closest prior art discloses a system for detecting the presence and precise location of a device bearing a RFID tag. As illustrated in Figure 2, the system comprises a control box and a plurality of interrogator modules connected one to another. Each interrogator module comprises a plurality of coils that are excited by a common signal received via a transmitter line shared by all the interrogator modules. Each of them further comprises a multiplexer for selectively connecting each coil to a receiver line shared by all the interrogator modules for transmitting a received signal. Each of the multiplexers has a cascadable serial interface enabling serial selection of the multiplexers.

US 5,821,902 is directed to a folded dipole microstrip antenna. According to a particular embodiment disclosed by reference to Figure 3, the antenna comprises a feeder line comprising microstrip circuit elements printed on an upper surface of a laminate board. The antenna further comprises a folded microstrip dipole element printed on the lower surface of the laminate board and a ground plane. The folded dipole and the ground plane are spaced by a foam spacer.

GB 2 469 343 discloses a multiplexer system for an antenna module containing a plurality of switches that permit the selection of one of the plurality on antennas selected. This document discloses a RF reader connected to an antenna module one of number of fixed ports provided. The selection of one module is ensured by a microcontroller.

US 2009/027202 discloses use of an RF multiplexer to select one of a plurality of modules, and each module itself comprises antenna array multiplexer to select an antenna within the module.

It is a broad object of the invention to remedy the shortcomings of the prior art as described here above.

It is an object of the present invention to provide a multiplexer system according to claim 1. Said multiplexer system for a pre-cabled module comprising antennas, a multiplexer and a device for controlling the multiplexer, the multiplexer allowing the establishment of an electrical path for a high frequency signal between a high frequency signal up-going link of the multiplexer system and one of a plurality of high frequency signal outputs of the multiplexer system for connecting the high frequency signal up-going link of the multiplexer system to one of the antennas or to a high frequency signal down-going link of the pre-cabled module, the device comprising a shift register having a plurality of latches serially connected together, the output of each latch of a set of latches of the plurality of latches being connected to control command inputs of the multiplexer for selecting one of the plurality of high frequency signal outputs.

Accordingly, the multiplexer system of the invention allows selection of an antenna according to a logic mechanism based on a shift register, thereby avoiding the use of firmware embedded within the multiplexer system and thus, of firmware update and download.

According to a particular embodiment, the multiplexer comprises a plurality of switches, the output of each latch of the set of latches of the plurality of latches being connected to a control command input of a distinct switch of the plurality of switches. Therefore, the multiplexer system of the invention enables an antenna to be selected without requiring each antenna to be identified with an identifier, thereby simplifying antenna management and configuration. According to the invention, the selection of an antenna cannot lead to collisions.

The multiplexer system advantageously further comprises at least one control signal up-going link and at least one control signal down-going link, the at least one control signal up-going link comprising an input control signal up-going link connected to an input of a first latch of the set of latches and the at least one control signal down-going link comprising an output control signal down-going link connected to an output of a last latch of the set of latches. The mechanism for selecting an antenna is thus easily implemented and requires only few control signals.

Still in a particular embodiment, the at least one control signal up-going link further comprises an output control signal up-going link selectively connected to the output of the last latch of the set of latches or to an input control signal down-going link of the at least one control signal down-going link. The output control signal up-going link is preferably selectively connected to the output of the last latch of the set of latches or to the input control signal down-going link, referred to the first input control signal down-going link, as a function of a state of a second input control signal down-going link of the at least one control signal down-going link. Therefore, the multiplexer system of the invention can be cascadingly connected to a similar multiplexer system to increase the number of selectable antennas.

It is also an object of the present invention to provide a pre-cabled module for furniture comprising the multiplexer system described above, the pre-cabled module comprising a plurality of antennas, each antenna of the plurality of antennas being connected to an output of the multiplexer, the high frequency signal up-going link of the multiplexer system being connected to a high frequency signal up-going link of the pre-cabled module, one of the plurality of high frequency signal outputs of the multiplexer system being connected to a high frequency signal down-going link of the pre-cabled module.

The pre-cabled module according to the invention allows the risk of establishing bad electrical connections to be reduced when installing a piece of furniture comprising such a pre-cabled module as well as reducing the time required for this installation. Moreover, the use of several pre-cabled modules of different shapes and sizes, according to the invention, enables different kinds of furniture to be made.

According to a particular embodiment, the pre-cabled module comprises at least one conductive plate, each of the antennas comprising a radiation electrode and a rigid microstrip line, a ground electrode of each of the antennas being the at least one conductive plate, each of the electrodes and the microstrip line of each antenna forming a layered conductive plate, each antenna further comprising fastening and insulating means for securing the three layered plates and for electrically connecting the radiation electrode to the rigid microstrip line, the ground electrode being insulating from the radiation electrode and the rigid microstrip line, the rigid microstrip line of each of the antennas being electrically connected to the multiplexer board.

The structure of the antennas according to the invention provides ease of manufacture for patch antennas, that do not require UHF connexion. Moreover, since the radiation electrodes and microstrip lines are insulated by means of air, there is no dielectric loss. Because of their simple shapes, radiation electrodes and microstrip lines are easily manufactured, with limited loss of material.

It is still another object of the invention to provide an assembly comprising a wireless reader, typically an RFID reader, and a plurality of pre-cabled modules as described above, connected together, one pre-cabled module of the plurality of pre-cabled modules being connected to the wireless reader. Advantages of such an assembly are similar to the ones disclosed above.

It is still another object of the invention to provide a method for selecting an antenna in an assembly as described above, the method comprising the steps of;
- determining a configuration parameter of the multiplexers for establishing an electrical path for a high frequency signal between the antenna to be selected and the wireless reader; and,
- writing at least a portion of the configuration parameter in the shift register of the multiplexer system of each pre-cabled module of the assembly as a signal sent to a first latch of the pre-cabled module connected to the wireless reader.

In a particular embodiment, the method further comprises a step of concatenating a plurality of configuration sub-parameters for determining the configuration parameter, each of the configuration sub-parameters being associated with a pre-cabled module of the plurality of pre-cabled modules.

The configuration parameter preferably comprises a plurality of bits, each bit of the plurality of bits allowing the selection of an antenna or of at least one pre-cabled module of the plurality of pre-cabled modules.

It is still another object of the invention to provide a method for determining the number of antennas connected to a wireless reader in an assembly described above, the method comprising the steps of,
- resetting to a first logical value the shift register of the multiplexer system of each pre-cabled module of the assembly and initializing a variable representing the number of antennas to zero;
- setting a signal sent to a first latch of the pre-cabled module connected to the reader to a second logical value; and,
- incrementing the variable representing the number of antennas at each rising edge of a clock signal transmitted to each latch of the pre-cabled modules until the signal carried by the output control signal up-going link of the pre-cabled module connected to the reader is equal to the second logical value.

Advantages given by these methods are similar to the ones given previously.

Further advantages of the present invention will become apparent to the ones skilled in the art upon examination of the drawings and detailed description. It is intended that any additional advantages be incorporated herein.
Figure 1 illustrates schematically a back view of a back panel of a shelving structure for CDs, DVDs, books, or the like embedding an RFID infrastructure;
Figure 2 illustrates schematically a cross sectional view of a standard patch antenna;
Figure 3 represents schematically a partial front view of a gondola showing a part of its back panel and two horizontal shelves, embedding an RFID infrastructure;
Figure 4 represents schematically a partial back view of the gondola partially shown in Figure 3;
Figure 5 represents schematically a partial top view of the gondola partially shown in Figure 3, illustrating, in particular, the arrangement of radiation electrodes and microstrip lines relative to the back panel;
Figure 6, comprising Figures 6a and 6b, illustrates an example of means for connecting a patch antenna and for fastening an associated microstrip line and a radiation electrode;
Figure 7 illustrates schematically an example of a MUX board for selecting an antenna in an array of antennas;
Figure 8 illustrates schematically a piece of furniture embedding pre-cabled modules comprising multiplexer systems according to the invention;
Figure 9 illustrates an example of a MUX board architecture for selecting an antenna in a pre-cabled module;
Figure 10 is a time diagram illustrating a control command of an arrangement of the type illustrated in Figure 9;
Figure 11 illustrates an example of a MUX board of a pre-cabled module, based on the architecture illustrated in Figure 9; and,
Figure 12 illustrates an example of an algorithm for determining the number of antennas that can be individually selected from a set of pre-cabled modules comprising MUX boards such as the one represented in Figure 11

According to the invention, there is provided a multiplexer system for pre-cabled modules comprising patch antennas that are particularly adapted for furniture such as gondolas.

According to a particular embodiment, the invention is directed to patch antennas for interrogating RFID tags of the UHF type whose signal frequency is approximately equal to 860 MHz or to 960 MHz. The arrangement of the antennas aims at obtaining automatically a real-time inventory of the items located within furniture.

The patch antenna structure is designed so as to minimize the amount of cabling and the number of UHF connectors.

To reduce cost, to make easy the implementation of the RFID system, and to optimize antenna density, parts of the furniture are used as elements of the patch antennas. More precisely, parts of the furniture comprising parts of the RFID system are preconfigured as modules so as to reduce the number of connexions, in particular connexions for RF and control signals, when retail furniture is to be installed on a retail site.

It is noted that positioning patch antennas, related feedlines, and other required electronic components in furniture typically depends, in particular, on the type of furniture to be installed and the type and size of the items to be presented in the furniture. Accordingly, preconfigured modules are determined so as to be as much as possible reusable.

In a particular embodiment, pieces of furniture embedding an RFID infrastructure comprise a visible surface, for example the front face of the back panel, and a hidden surface such as the back face of the back panel. The back panel, made of a conductive material such as sheet metal, is used as the ground electrode of the patch antenna. The radiation electrode of the patch antenna is arranged in front of the back panel while the feedlines are arranged on the other side of the back panel, each radiation electrode being connected to a feedline with a probe feed arranged in a hole of the back panel. Each feedline is connected to a multiplexer which is configured to select at most one of radiation electrodes to which it is connected. Several multiplexers can be used in the same piece of furniture. In such a case, all the multiplexers connected to the radiation electrodes are advantageously connected to each other so as to transmit RF and control signals.

For the sake of illustration, the following description is directed to furniture of the gondola type. However, the invention applies to any type of furniture.

Figure 3 represents schematically a partial front view of a gondola showing a part of its back panel 300 and two horizontal shelves 305-1 and 305-2, embedding an RFID infrastructure. For the sake of clarity, the parts shown are not represented with a common scale.

As illustrated, several radiation electrodes, generically referred to as 310, are visible in front of the back panel 300. According to the given example, each radiation electrode is fastened by five rivets, screws, or the like, one being used as a probe feed. Each radiation electrode, in combination with the other parts of the corresponding patch antenna, is able to read the content of electronic tags located in its vicinity, typically in front of it (according to its radiation pattern), as illustrated with reference 315 that related to items placed on horizontal shelf 305-2, on which electronic tags are fixed.

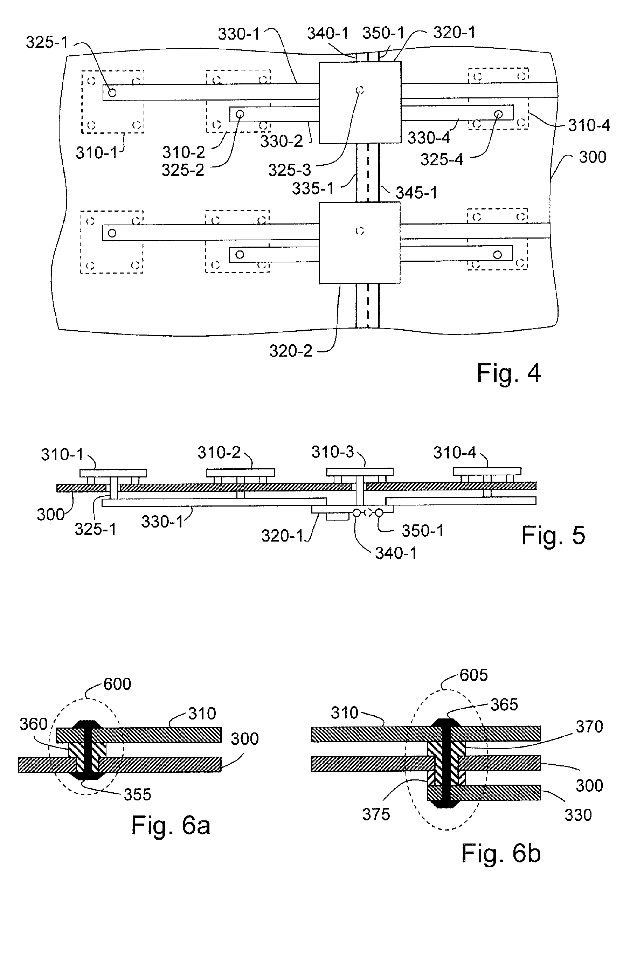

Figure 4 represents schematically a partial back view of the gondola partially shown in Figure 3. As illustrated, multiplexer systems, referred to as MUX boards, are connected to groups of antennas. For example, the MUX board 320-1 is connected to radiation electrodes 310-1 to 310-4 (one radiation electrode being masked by the MUX board 310-1), by means of probe feeds 325-1 to 325-4 (crossing back panel 300) and rigid microstrip lines 330-1 to 330-4, respectively. It is noted that the position of a probe feed relative to the corresponding radiation electrode is set as a function of the antenna characteristics. According to the illustrated example, each probe feed is horizontally centred on the radiation electrode and vertically located around one or two thirds of the radiation electrode's height (allowing two parallel rigid microstrip lines to link a MUX board to two radiation electrodes, as illustrated).

Each MUX board comprises a multiplexer allowing selection of at most one antenna so as to connect the selected radiation electrode to a radio frequency signal up-going link (*RF_up*) or to connect the radio frequency signal up-going link to a radio frequency signal down-going link (*RF_down*) for selecting an antenna connected to a MUX board that is directly or indirectly connected to the MUX board considered. For example, *RF_up* 335-1 may be connected to any one of the radiation electrodes 310-1 to 310-4 or to *RF_down* 340-1.

It is considered herein that an up-going signal, from the perspective a particular MUX board, is directed to a link established between the particular MUX board and a reader to which it is connected (directly or indirectly) while a down-going signal is directed to a link established between the particular MUX board and another MUX board, the latter being connected, directly or indirectly, to a reader via the particular MUX board.

Each MUX board is controlled by control signals allowing the selection of a given antenna, that is to say a given radiation electrode. As illustrated, the control signals are transmitted from a MUX board to its neighbour. For example, the control signals received from control signal up-going links 345-1 are used to control MUX board 320-1 and are transmitted to control signal down-going links 350-1.

According to a particular embodiment, control signal links are bidirectional, as described herein below.

If needed, the MUX board can be powered (as illustrated with dotted lines connecting the MUX boards).

Typically, a MUX board is a PCB (Printed Circuit Board) embedding one or several standard multiplexer devices and associated electronic circuitry. It is designed so as to be easily connectable to the microstrip lines that are connected to the radiation electrodes to which the MUX board has to be connected.

Figure 5 represents schematically a partial top view of the gondola partially shown in Figure 3, illustrating, in particular, the arrangement of the radiation electrodes 310 and the rigid microstrip lines relative to the back panel 300.

For the sake of illustration, the radiation electrodes can be made of aluminium, austenitic stainless steel, brass, copper, or more generally any non-magnetic material that is a good electrical conductor. Each radiation electrode can be a square device of 160 x 160 millimetres and of one millimetre thick.

The radiation electrodes may be spaced apart by 160 to 300 millimetres, for example 266 millimetres. In the given example, the distance between radiation electrodes and the back panel is typically a few millimetres, for example 2 millimetres.

Rigid microstrip lines may also be made of aluminium, austenitic stainless steel, brass, copper, or more generally any non-magnetic material that is a good electrical conductor. Their width may be a few centimetres (or less than one centimetre) while their thickness can be 1 millimetre. Their length is typically in the range of 200 to 450 millimetres. Likewise, the distance between microstrip lines and the back panel is typically a few millimetres, for example 2 millimetres. As illustrated, microstrip lines are only secured by electrical and mechanical connexions with MUX boards and by fastening means that are also used for providing electrical connexions with radiation electrodes. In some cases (for example for long microstrip lines), dielectric spacer can be used to space apart the microstrip line and the back panel by a pre-determined distance. Those spacers can extend partially or totally in the volume formed between the back panel and the microstrip line.

Figure 6, comprising Figures 6a and 6b, illustrates an example of means for connecting a patch antenna and for fastening an associated microstrip line and a radiation electrode.

According to a particular embodiment, two types of fastening means are used for attaching a radiation electrode to a metal sheet used as ground electrode (typically the back panel or a horizontal shelf of a piece of furniture). A first type (reference 600 in Figure 6a) is used for attaching only the radiation electrode to the metal sheet while the other one (reference 605 in Figure 6b) is used for attaching the radiation electrode and a microstrip line to the metal sheet and for establishing an electrical connexion between the radiation electrode and the microstrip line. According to the illustrated example, each radiation electrode is fastened by means of four fastening means of the first type, located in the corners of the radiation electrode, and one fastening means of the second type, horizontally centred on the radiation electrode and vertically located around one or two thirds of the radiation electrode's height. The vertical location is determined so as to keep the distance between two parallel microstrip lines large enough to avoid line coupling while respecting impedance matching (between microstrip line and radiation electrode).

Fastening means of the first type can be rivets, for example snap rivets, or the like. Such fastening means are advantageously made of dielectric material such as nylon. If conductive material is used, dielectric discs should be placed between the rivet and the back panel (or more generally the ground electrode) and/or between the rivet and the radiation electrode to avoid electrical contact between the electrodes. A dielectric spacer is arranged in between the electrodes. It can be made of nylon.

As shown in Figure 6a, a snap rivet 355, for example a nylon snap rivet having a head diameter of approximately 8 millimetres and a body diameter of approximately 3 millimetres, is used for securely attaching radiation electrode 310 to back panel 300. To that end, aligned holes are drilled in the electrodes for receiving the mating parts of the snap rivet.

A dielectric spacer 360 is arranged in between the radiation electrode 310 and the back panel 300 to provide a predetermined distance, for example two millimetres, between them. The spacer can be a simple washer or a washer having a shoulder for improving stability (in such a case, one of the holes made in the electrodes is larger than the diameter of the fastening means). It can be made of nylon.

The fastening means of the second type can be rivets, for example pop rivets, or the like. Such fastening means is made of conductive material, for example of aluminium for establishing an electrical connexion between the radiation electrode and a microstrip line. Dielectric spacers are arranged in between the electrodes, the ground electrode (typically the back panel) and the microstrip line, and the fastening means made of conductive material and the ground electrode. Such spacers can be made of nylon.

As illustrated in Figure 6b, radiation electrode 310 that is connected to microstrip line 330 cooperates with the back panel 300, used as ground electrode, to form a patch antenna. Radiation electrode 310 is electrically connected to microstrip line 330 via a probe feed that takes the form of rivet 365, for example a pop rivet made of aluminium. According to the given example, the head diameter of the rivet 365 is approximately 5 to 8 millimetres while the diameter of its body is approximately 3 to 5 millimetres (the head diameter being greater than the diameter of the body).

Rivet 365 extends across electrodes 300 and 310 and microstrip line 330 through aligned holes. According to the illustrated embodiment, the holes formed in radiation electrode 310 and microstrip line 330 are approximately of the same diameter which is equal to or slightly larger than the diameter of the rivet body while the diameter of the hole drilled in back panel 300 is larger so as to insulate the back panel from the rivet by means of a spacer having a cylindrical shape (which may be part of the spacer used in between the back panel and the radiation electrode or in between the back panel and the microstrip line).

Radiation electrode 310 is maintained at a predetermined distance (e.g. 2 mm) from the back panel 300 thanks to dielectric spacer 370. According to the illustrated embodiment, spacer 370 comprises a shoulder cooperating with the hole drilled in back panel 300 for improving stability. The shoulder of spacer 370 can extend partially or totally in the volume formed between the back panel 300 and radiation electrode (except the holes for snap rivets 355). Spacer 370 extends from the radiation electrode to microstrip line 330 through back panel 300. A dielectric washer (375) surrounding spacer 370 is arranged between back panel 300 and microstrip line 330. The thickness of dielectric washer 375 determines the distance (e.g. 2 mm) between back panel 300 and microstrip line 330.

The spacers 370 and 375 are advantageously sized as a function of a requested characteristic impedance (e.g. 50 ohms) of a transmission line formed by the rigid microstrip line and the fastening means used for attaching the radiation electrode and a microstrip line to the metal sheet and for establishing an electrical connexion between the radiation electrode and the microstrip line.

Rivet 365 is preferably mated on the microstrip line side for aesthetic reasons (the radiation electrodes being located on the front side of the black panel, they are visible when the corresponding piece of furniture is in use contrary to the microstrip lines).

The spacers used in the connexion means of the first and second types advantageously comprise holes receiving connexion means for securing the spacer and guiding the fastening means in associated holes of the ground electrodes.

The connexion means between the radiation electrodes and microstrip lines aim at providing an electrical connexion between the radiation electrodes and microstrip lines, mechanically fastening the radiation electrodes and microstrip lines to the back panels, and providing a predetermined distance, typically two millimetres, between electrodes and between ground electrodes and microstrip lines. In other words, the connexion fulfils both a mechanical function and an electrical function.

The use of rivets as connexion means, in particular aluminium rivets, provides advantages such as reduced sizes, reduced costs, and ease of mounting.

It is noted that although a ground electrode is positioned in between radiation electrodes and microstrip lines in the illustrated examples, radiation electrodes and microstrip lines can be positioned on the same side of a ground electrode. Likewise, although the given examples mainly concern gondola and back panels, the invention applies equally to other parts and types of furniture such as horizontal shelves.

Nevertheless, it is noted that positioning a ground electrode between radiation electrodes and microstrip lines leads to a low electrical coupling (capacitive or inductive coupling) between radiation electrodes and microstrip lines.

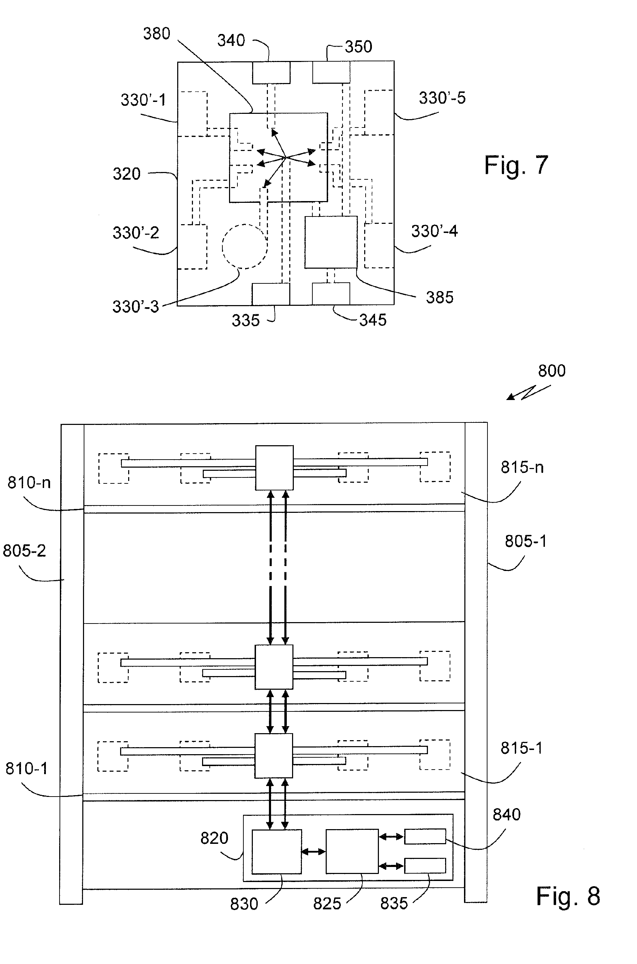

Figure 7 illustrates schematically an example of a MUX board 320 for selecting an antenna in an array of antennas. As shown, MUX board 320 comprises footprints 330'-1 to 330'-5 for connecting microstrip lines or a probe feed (in the case of a radiation electrode positioned in front of the MUX board). The electrical connexion between footprints and microstrip lines or a probe feed can be made mechanically, for example by pressure, by welding, or the like. The MUX board also comprises *RF_up* 335 and *RF_down* 340 for conveying RF signals as well as control signal up-going links 345 and control signal down-going links 350 as described above.

MUX board 320 further comprises a multiplexer (380) for directing *RF_up* 335 to one of the footprints 330'-1 to 330'-5 and *RF_down* 340, as suggested by the six arrows joining a point linked to footprint 335 to points linked to the other footprints and to *RF_down* 340. Multiplexer 380 is controlled by control circuit 385.

As illustrated in the given example, MUX board 320 comprises control circuit 385 that receives control signals from control signal up-going links 345. The received control signals are transmitted to control signal down-going links 350 (after having been modified, if necessary, in control circuit 385).

Advantageously, control signals, for example control signals as modified by control circuit 385 are retransmitted via control signal up-going links 345 that is used, accordingly, to receive and transmit control signals.

Similarly, control signal down-going links 350 can be used to transmit and receive control signals. Therefore, control signals received from control signal down-going links 350 can be retransmitted to control signal up-going links 345.

It is noted that the control signals can be generated in the RFID reader that is used and to which the MUX boards are connected (most of RFID readers comprise an 8 bits I/O port).

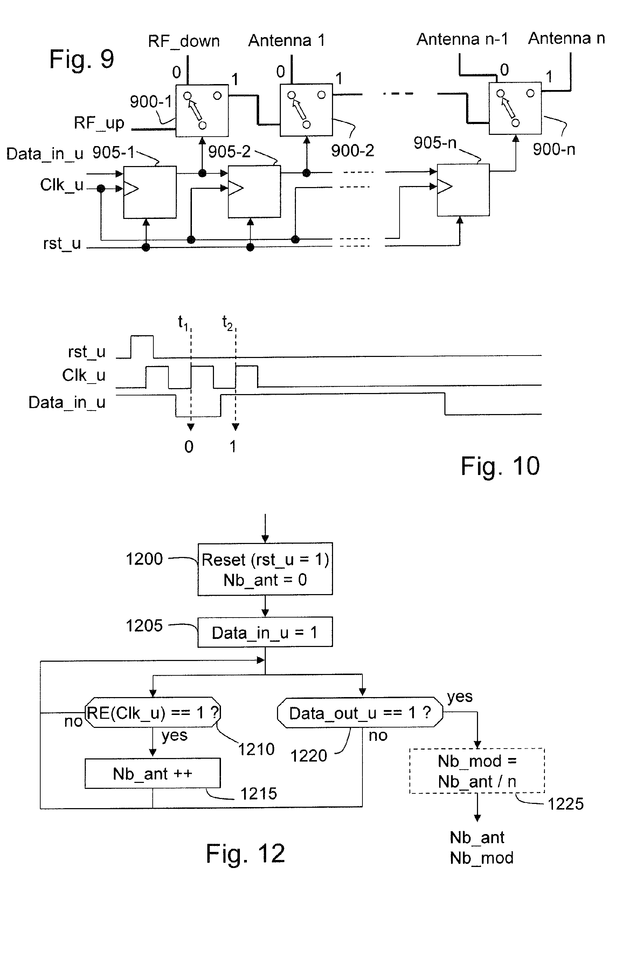

An example of implementation of MUX board 320 is described by reference to Figures 9 to 12.

A MUX board, the corresponding selectable antennas and the associated elements can be configured as pre-cabled modules so as to facilitate the assembly of furniture embedding RFID infrastructure. Indeed, retail furniture is generally made by assembling standardized parts such as vertical upright columns, back panels, cross-braces, arms, horizontal shelves, and so on. Accordingly, back panels and horizontal shelves, in particular, may consist of pre-cabled modules of standardized dimensions, embedding RFID elements, so as to be easily mounted in furniture. Pre-cabled modules comprise at least one conductive plate, typically a metal sheet, uses as ground electrode. Such conductive plate is, for example, a ferromagnetic back panel of standard size such as a metal sheet having standard vertical hitching means of 25 millimetres pitch and a width of 1330, 1250, 1220, 1000, 915, 830, 665, or 500 millimetres.

Several pre-cabled modules such as back panels can be mounted side by side. In such a case, connexions are preferably established between modules so as to increase the size of the site wherein RFID tags may be read without increasing complexity for controlling the reading operations. In other words, modules can be arranged so as to increase the number of radiation electrodes while using a main controller.

According to a particular embodiment, pieces of furniture are considered, from an RFID system point of view, as a stand-alone system. Therefore, each piece of furniture comprises a plurality of antennas, one or more RFID reader(s), and processing means able to interrogate RFID tags located in the vicinity of the antennas and to transmit obtained information.

Figure 8 illustrates schematically a piece of furniture embedding pre-cabled modules.

As shown, pre-cabled modules 815-1 to 815-n are back panels of a piece of furniture (800) of the gondola type that comprises vertical upright columns 805-1 and 805-2 as well as horizontal shelves 810-1 to 810-n.

Piece of furniture 800 comprises processing means 820 having mother board 825 which is connected to RFID reader 830, storage means 835 (e.g., hard drive, solid-state drive, flash memory, or the like) and communication interface 840. Mother board 825 is, for example, a standard personal computer (PC) mother board. Communication interface 840 can be, for example, of the Ethernet or of the WiFi type. It allows processing means 820 to receive information from a similar processing system belonging to another piece of furniture and to transmit information to another processing system, in particular to a processing system belonging to another piece of furniture or to a central server.

Each of the pre-cabled modules 815-1 to 815-n comprises one MUX board such as the one described with reference to Figure 7 and an array of antennas, each of which comprising a radiation electrode which is connected to the MUX board by way of a microstrip line or a probe feed as described previously.

RFID reader 830 is connected to the first pre-cabled module 815-1 which is in turn connected to the second pre-cabled module 815-2 and so on so that each pre-cabled module is connected to the neighbouring pre-cabled module.

More precisely, an RF signal link of RFID reader 830 is connected to the RF signal up-going link of the MUX board (*RF_up*) of the first pre-cabled module (815-1), the RF signal down-going link of the MUX board (*RF_down*) of the first pre-cabled module (815-1) is connected to the RF signal up-going link of the MUX board of the second pre-cabled module (815-2), and so on.

Likewise, control signal links of RFID reader 830 are connected to the control signal up-going links of the MUX board of the first pre-cabled module (815-1), the control signal down-going links of the MUX board of the first pre-cabled module (815-1) are connected to the control signal up-going links of the MUX board of the second module (815-2), and so on.

The RF connexions are preferably established by using UHF coaxial cables while control signal (and power) connexions are preferably established by using ribbon cables. Connectors, preferably keyed connectors, can be used to establish such connexions.

According to a particular embodiment, the MUX board of a pre-cabled module comprises the same number of two-state UHF switches as the number of patch antennas that the pre-cabled module comprises. In this embodiment, each two-state UHF switch can be controlled by a latch, for example a D flip-flop. It is reminded here that the input (D) of a D flip-flop is copied to its output (*Q*) on clock (*Clk*) rising edges while a reset signal (*rst*) is used to set its output to the zero logical state.

Such two-state UHF switches and D flip-flops are serially connected as illustrated in Figure 9.

As shown, the input of each two-state UHF switch is connected to the output of a previous two-state UHF switch or to *RF_up* while one of its outputs is connected to an antenna and the other output is connected to another antenna, to the input of a following two-state UHF switch, or to *RF_down.*

For example, the input of the first two-state UHF switch 900-1 is connected to *RF_up* while its outputs are connected to *RF_down* (position "0") and to the input of the second two-state UHF switch 900-2 (position "1") of which the outputs are connected to antenna 1 (position "0") and to the input of the third two-state UHF switch (position "1"), not represented. The input of the *n*^{th} (and last) two-state UHF switch 900-n is connected to an output of the *(n*-*1)*^{th} two-state UHF switch (not represented) while its outputs are connected to antenna n-1 and antenna n (positions "0" and "1", respectively).

The first two-state UHF switch 900-1 is controlled by the output of the first D flip-flop 905-1. Likewise, the second two-state UHF switch 900-2 is controlled by the output of the second D flip-flop 905-2 and the *n*^{th} two-state UHF switch 900-n is controlled by the output of the n^{th} D flip-flop 905-n.

The input of the first D flip-flop 905-1 is connected to a control signal up-going link referred to *Data_in_u* while its output is connected to the input of the second D flip-flop 905-2. In turn, the output of the second D flip-flop 905-2 is connected to the input of the third D flip-flop (not represented) and so on.

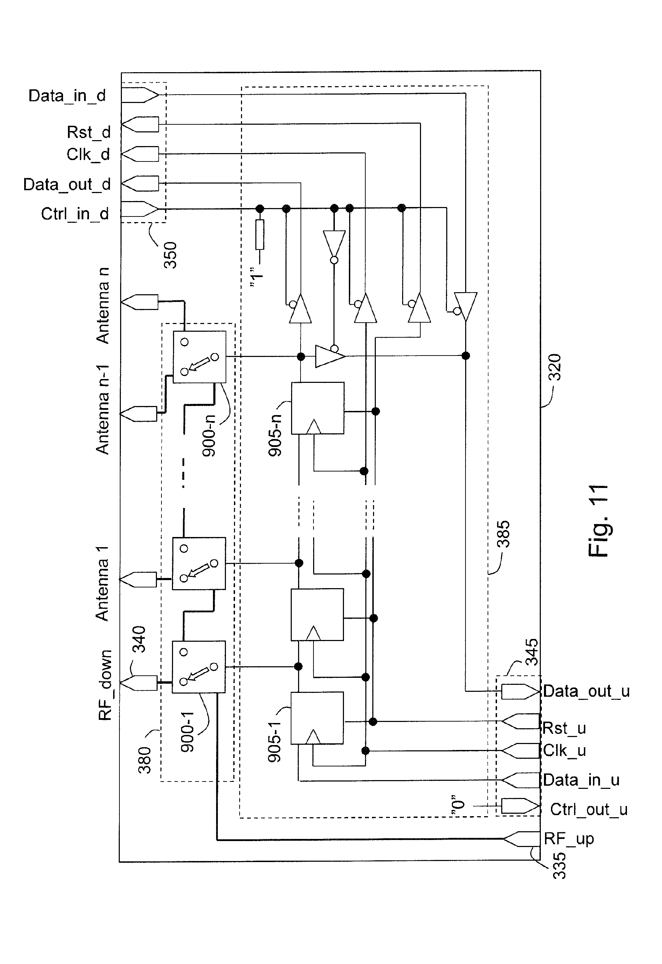

As described with reference to Figure 11, the output of the *n*^{th} D flip-flop 905-n is advantageously connected to a control signal down-going link referred to as *Data_out_u* enabling dynamic management of the antennas.

As illustrated in Figure 9, all D flip-flops 905-1 to 905-n, constituting a shift register, share a common clock signal (*Clk_u*) and a common reset signal (*rst_u*).

According to the arrangement of Figure 9, selecting a specific antenna consists in writing a particular configuration parameter in the shift register constituted by the D flip-flops of the MUX board.

For the sake of illustration, selecting the first antenna (antenna 1) using the MUX board illustrated in Figure 9 consists in setting two-state UHF switch 900-1 to position "1" (for selecting its output connected to the input of flip-flop 900-2) and two-state UHF switch 900-2 to position "0" (for selecting the output connected to antenna 1). To that end, the logical value "10" is written in the shift register constituted by the D flip-flops 905-1 to 905-n as illustrated in Figure 10.

After having reset D flip-flops 905-1 to 905-n thanks to reset signal *rst_u,* the output of each D flip-flop is set to zero. Next, the clock signal *Clk_u* is activated for copying the input of each D flip-flop 900-1 to 900-n to its output at each rising edge. Accordingly, the logical value "0" of control signal *Data_in_u* (connected to the input of D flip-flop 900-1) is copied to the output of D flip-flop 900-1 at time t₁. Then, at time t₂, the logical value "0" of the output of D flip-flop 900-1, that is to say of the input of D flip-flop 900-2, is copied to the output of D flip-flop 900-2 and the logical value "1" of control signal *Data*_*in*_*u* is copied to the output of D flip-flop 900-1. The clock signal *Clk_u* is then frozen so that D flip-flops 900-1 to 900-n do not change state. Consequently, the first antenna is selected and can be used for emitting and receiving signals.

Several MUX boards comprising the two-state UHF switches and the D flip-flops illustrated in Figure 9 can be connected together to increase the number of antennas that can be used as described with reference to Figure 8. In such a case, the configuration parameter that should be written in the shift register constituted by the D flip-flops of all the MUX boards used, corresponds to the concatenation of the configuration sub-parameters associated with each MUX board.

For example, if four pre-cabled modules are used, each comprising four antennas connected to a MUX board similar to the one schematically illustrated in Figure 9, and if the third antenna of the third module is to be selected, then the configuration parameter that should be written in the shift register is "0xxx0xxx1110xxxx" where x represents any value (i.e. logical value "0" or "1"). "0xxx0xxx1110xxxx" represents the concatenation of the configuration sub-parameters "0xxx", "0xxx", "1110", and "xxxx" associated to the first, second, third and fourth modules, respectively.

The configuration sub-parameter "0xxx" associated to the first and second modules means that the first two-state UHF switches of these modules are set to position "0" (for selecting the switch output connected to *RF_down,* that is to say to *RF_up* of the second and third modules, respectively), the position of the other two-state UHF switches of the first and second modules having no use.

Similarly, the configuration sub-parameter "1110" associated with the third module means that the first, second, and third two-state UHF switches of this module are set to position "1" (for selecting the switch output connected to the input of the second, third, and fourth two-state UHF switches, respectively) and that the fourth two-state UHF switch of the module is set to position "0" (for selecting the switch output connected to the corresponding antenna.

The configuration parameter "0xxx0xxx1110xxxx" is written in the shift register serially, bit by bit, starting from the least significant bit (the rightmost bit) to the most significant bit (the left-most bit) that is to say from "x" to "0".

It is noted that since the first 5 least significant bits (which are equal to "xxxxx") are of no use, the configuration parameter "0xxx0xxx1110xxxx" can be simplified to "0xxx0xxx1110" (reducing the number of clock cycles required to write the configuration parameter in the shift register).

Table 1 given in the Appendix illustrates all the configuration parameters for selecting an antenna in a system comprising four pre-cabled modules, each pre-cabled module having four antennas, where the MUX boards of these pre-cabled modules are similar to the one shown in Figure 9. According to this example, *Bᵢ* designates the *i*^{th} bit of the configuration parameter while *A.j, M.k* designates the selection of the *j*^{th} antenna of the *k*^{th} pre-cabled module.

In this embodiment which is particularly simple to implement and which requires few control signals, the length of the configuration parameter is set as a function of the number of antennas connected to a single RFID reader.

As mentioned above, such an embodiment enables dynamic management of the pre-cabled modules and antennas that are used. Indeed, after having initialized the shift register and set the logical value "1" at its input, the number of D flip-flops (corresponding here to the number of selectable antennas) is determined by the number of clock rising edges counted until the logical value "1" reaches the output of the last D flip-flop.

To that end, a simple logic is advantageously implemented in each MUX board so as to transmit to a reader the output value of the last D flip-flop if no MUX board is connected to the down-going links of the current MUX board or a value received from another MUX board if a MUX board is connected to the down-going links of the current MUX board. Such a simple logic is illustrated in Figure 11 which represents an example of an implementation of a MUX board based on the arrangement of Figure 9.

As illustrated, the MUX board 320 comprises a multiplexer 380 having a plurality of two-state UHF switches and a control circuit 385 having a plurality of D flip-flops, an inverter (NOT gate) and three-state buffers (whose input is copied to the output if the control command is "0" and whose output is set to a high impedance if the control command is "1 ").

The control signal up-going links 345 of MUX board 320 comprise a link for carrying a *Ctrl_out_u* signal which is set to the logical value "0", a link for carrying a *Data_in_u* signal which is used to write a configuration parameter in the shift register constituted by the D flip-flops, a link for carrying a *Clk_u* clock signal, a link for carrying a *rst_u* reset signal, and a link for carrying a *Data_out_u* signal for transferring the output value of the last D flip-flop or a value received from another MUX board.

Similarly, the control signal down-going links 350 of the MUX board 320 comprise a link for carrying a *Ctrl_in_d* signal, a link for carrying a *Data_out_d* signal, a link for carrying a *Clk_d* signal, a link for carrying a *rst_d* signal, and a link for carrying a *Data_in_d* signal.

The control signal up-going links 345 are to be connected to an RFID reader or to a MUX board connected (directly or indirectly) to an RFID reader while the control signal down-going links 350 are to be connected to a MUX board which is connected to an RFID reader via MUX board 320 (that is to say a MUX board connected directly or indirectly to the down-going links of MUX board 320).

When MUX board 320 is connected to another MUX board 320' that is to be connected to an RFID reader via MUX board 320, the links carrying *Ctrl_in_d, Data_out_d, Clk_d, rst_d,* and *Data_in_d* signals of MUX board 320 are connected to the links carrying *Ctrl_out_u', Data_in_u', Clk_u', rst_u',* and *Data_out_u'* signals of MUX board 320', respectively.

As illustrated, the links carrying *Clk_d* and *rst_d* signals are connected to the links carrying *Clk_u* and *rst_u* signals, respectively, via three-state buffers controlled by *Ctrl_in_d* signal. Accordingly, the links carrying *Clk_d* and *rst_d* signals are connected to the links carrying *Clk_u* and *rst_u* signals, respectively, only if MUX board 320 is connected to another MUX board that is to be connected to an RFID reader via MUX board 320 (that is to say a MUX board connected directly or indirectly to the down-going links of MUX board 320).

Similarly, *Ctrl_in_d* signal controls two three-state buffers whose inputs are connected to the output of the last D flip-flop and to the link carrying *Data_in_d* signal, respectively, so that *Data_out_u* signal corresponds to the output of the last D flip-flop if MUX board 320 is not connected to another MUX board that is to be connected to an RFID reader via MUX board 320 and to *Data_in_d* signal otherwise.

Likewise, the output of the last D flip-flop is connected to the link carrying *Data_out_d* signal via a three-state buffer controlled by *Ctrl_in_d* so that the output of the last D flip-flop is connected to the link carrying *Data_out_d* only if MUX board 320 is connected to another MUX board that is to be connected to an RFID reader via MUX board 320.

In order to simplify the installation of shelves embedding the invention, the configuration of the system, in particular for determining the number of antennas connected to an RFID reader, can be carried out dynamically.

Figure 12 illustrates an example of an algorithm for determining the number of antennas that can be individually selected from a set of pre-cabled modules comprising MUX boards such as the one described with reference to Figure 11.

As shown, a first step (step 1200) consists in resetting all the D flip-flops (of all the MUX boards) used for controlling the two-state UHF switches by setting the reset signal to logical value "1" and by initializing the *NB_ant* value, representing the number of antennas, to zero.

Next, the *Data_in_u* signal that is applied to the first D flip-flop of the first pre-cabled module connected to the apparatus carrying out the steps of the algorithm shown in Figure 12 (typically an RFID reader) is set to one (step 1205). The clock signal *Clk_u* is activated (if it was not).

A test is then performed to detect the rising edges of the clock signal (step 1210). If a rising edge of the clock signal is detected, the *NB*_*ant* value is increased by one (step 1215).

In parallel, another test is performed to determine whether or not the *Data_out*_*u* signal is equal to the logical value "1" (step 1220). If the *Data_out_u* signal is equal to the logical value "1", the process is stopped, the number of antennas (or at least of D flip-flops that can be used to select antennas) being equal to the value of *Nb_ant.* Optionally, if the number of antennas per pre-cabled module is known and is the same for all the pre-cabled modules, the number *Nb*_*mod* of pre-cabled modules can be determined by dividing the value of *Nb_ant* by the number n of antennas in each pre-cabled module (step 1225).

It is noted that such an algorithm can be executed periodically to check the configuration of the system, allowing pre-cabled modules to be added and/or removed dynamically.

Accordingly, pieces of furniture comprising pre-cabled modules embedding RFID infrastructure may be easily assembled or modified without perturbing their processing means.

Returning to Figure 8, the information regarding the piece of furniture such as the number of pre-cabled modules and the number of antennas (i.e. the number of radiation electrodes) can be stored in storage means 835 for later use.

When the processing means 820 have to interrogate RFID tags located in the vicinity of a radiation electrode (that is to say an antenna), the latter is identified according to an index with which it is associated. Next, the MUX boards are configured by writing a configuration parameter based on such an index, as described above, to connect the selected radiation electrode to the RFID reader so that the latter can interrogate the RFID tags on a standard basis. The read data is preferably stored within storage means 835 before being transmitted to other processing means such as a central server executing an ERP (Enterprise Resource Planning) or similar applications.

Naturally, in order to satisfy local and specific requirements, a person skilled in the art may apply to the solution described above many modifications and alterations all of which, however, are included within the scope of protection of the invention as defined by the following claims.

### APPENDIX

**Table 1**

| **B₁₅** | **B₁₄** | **B₁₃** | **B₁₂** | **B₁₁** | **B₁₀** | **B₉** | **B₈** | **B₇** | **B₆** | **B₅** | **B₄** | **B₃** | **B₂** | **B₁** | **B₀** | **Selection** |
|---|---|---|---|---|---|---|---|---|---|---|---|---|---|---|---|---|
| 1 | 0 | x | x | x | x | x | x | x | x | x | x | x | x | x | x | **A.1, M.1** |
| 1 | 1 | 0 | x | x | x | x | x | x | x | x | x | x | x | x | x | **A.2, M.1** |
| 1 | 1 | 1 | 0 | x | x | x | x | x | x | x | x | x | x | x | x | **A.3, M.1** |
| 1 | 1 | 1 | 1 | x | x | x | x | x | x | x | x | x | x | x | x | **A.4, M.1** |
| 0 | x | x | x | 1 | 0 | x | x | x | x | x | x | x | x | x | x | **A.1, M.2** |
| 0 | x | x | x | 1 | 1 | 0 | x | x | x | x | x | x | x | x | x | **A.2, M.2** |
| 0 | x | x | x | 1 | 1 | 1 | 0 | x | x | x | x | x | x | x | x | **A.3, M.2** |
| 0 | x | x | x | 1 | 1 | 1 | 1 | x | x | x | x | x | x | x | x | **A.4, M.2** |
| 0 | x | x | x | 0 | x | x | x | 1 | 0 | x | x | x | x | x | x | **A.1, M.3** |
| 0 | x | x | x | 0 | x | x | x | 1 | 1 | 0 | x | x | x | x | x | **A.2, M.3** |
| 0 | x | x | x | 0 | x | x | x | 1 | 1 | 1 | 0 | x | x | x | x | **A.3, M.3** |
| 0 | x | x | x | 0 | x | x | x | 1 | 1 | 1 | 1 | x | x | x | x | **A.4, M.3** |
| 0 | x | x | x | 0 | x | x | x | 0 | x | x | x | 1 | 0 | x | x | **A.1, M.4** |
| 0 | x | x | x | 0 | x | x | x | 0 | x | x | x | 1 | 1 | 0 | x | **A.2, M.4** |
| 0 | x | x | x | 0 | x | x | x | 0 | x | x | x | 1 | 1 | 1 | 0 | **A.3, M.4** |
| 0 | x | x | x | 0 | x | x | x | 0 | x | x | x | 1 | 1 | 1 | 1 | **A.4, M.4** |

## Claims

1. A multiplexer system (320) for a pre-cabled module (815) comprising a plurality of antennas, the multiplexer system comprising a multiplexer (380) and a device (385) for controlling the multiplexer, the multiplexer allowing the establishment of an electrical path for a high frequency signal between a high frequency signal up-going link of the multiplexer system and one of a plurality of high frequency signal outputs of the multiplexer system, the multiplexer system being **characterized in that** each of the plurality of high frequency outputs connects the high frequency signal up-going link of the multiplexer system to one of the plurality of antennas or to a high frequency signal down-going link of the pre-cabled module, and **in that** the device comprises a shift register having a plurality of latches (905) serially connected together, the output of each latch of a set of latches of the plurality of latches being connected to control command inputs of the multiplexer for selecting one of the plurality of high frequency signal outputs.

2. The multiplexer system of claim 1 wherein the multiplexer comprises a plurality of switches (900), the output of each latch of the set of latches of the plurality of latches being connected to a control command input of a distinct switch of the plurality of switches.

3. The multiplexer system of claim 1 or of claim 2 further comprising at least one control signal up-going link (345) and at least one control signal down-going link (350), the at least one control signal up-going link comprising an input control signal up-going link connected to an input of a first latch of the set of latches and the at least one control signal down-going link comprising an output control signal down-going link connected to an output of a last latch of the set of latches.

4. The multiplexer system of claim 3 wherein the at least one control signal up-going link further comprises an output control signal up-going link selectively connected to the output of the last latch of the set of latches or to an input control signal down-going link of the at least one control signal down-going link.

5. The multiplexer system of claim 4 wherein the output control signal up-going link is selectively connected to the output of the last latch of the set of latches or to the input control signal down-going link, referred to the first input control signal down-going link, as a function of a state of a second input control signal down-going link of the at least one control signal down-going link.

6. A pre-cabled module for furniture comprising the multiplexer system of any one of the previous claims, the pre-cabled module comprising a plurality of antennas, each antenna of the plurality of antennas being connected to an output of the multiplexer, the high frequency signal up-going link of the multiplexer system being connected to a high frequency signal up-going link of the pre-cabled module, one of the plurality of high frequency signal outputs of the multiplexer system being connected to a high frequency signal down-going link of the pre-cabled module.

7. The pre-cabled module of claim 6 comprising at least one conductive plate (300), each of the antennas comprising a radiation electrode (310) and a rigid microstrip line (330), a ground electrode of each of the antennas being the at least one conductive plate, each of the electrodes and the microstrip line of each antenna forming a layered conductive plate, each antenna further comprising fastening and insulating means (365, 370, 375) for securing the three layered plates and for electrically connecting the radiation electrode to the rigid microstrip line, the ground electrode being insulating from the radiation electrode and the rigid microstrip line, the rigid microstrip line of each of the antennas being electrically connected to the multiplexer board.

8. An assembly comprising a wireless reader and a plurality of pre-cabled modules according to claim 6 or claim 7, connected together, one pre-cabled module of the plurality of pre-cabled modules being connected to the wireless reader.

9. A method for selecting an antenna in an assembly according to claim 8, the method comprising the steps of;
- determining a configuration parameter of the multiplexers for establishing an electrical path for a high frequency signal between the antenna to be selected and the wireless reader; and,
- writing at least a portion of the configuration parameter in the shift register of the multiplexer system of each pre-cabled module of the assembly as a signal sent to a first latch of the pre-cabled module connected to the wireless reader.

10. The method of claim 9 further comprising a step of concatenating a plurality of configuration sub-parameters for determining the configuration parameter, each of the configuration sub-parameters being associated with a pre-cabled module of the plurality of pre-cabled modules.

11. The method of claim 9 or of claim 10 wherein the configuration parameter comprises a plurality of bits, each bit of the plurality of bits allowing the selection of an antenna or of at least one pre-cabled module of the plurality of pre-cabled modules.

12. A method for determining the number of antennas connected to a wireless reader in an assembly comprising a wireless reader and a plurality of pre-cabled modules according to claim 6 or claim 7, connected together, one pre-cabled module of the plurality of pre-cabled modules being connected to the wireless reader, each of the pre-cabled modules of the plurality of pre-cabled modules comprising the multiplexer system of claim 4, the method comprising the steps of,
- resetting (1200) to a first logical value the shift register of the multiplexer system of each pre-cabled module of the assembly and initializing a variable representing the number of antennas to zero;
- setting (1205) a signal sent to a first latch of the pre-cabled module connected to the reader to a second logical value; and,
- incrementing (1215) the variable representing the number of antennas at each rising edge (1210) of a clock signal transmitted to each latch of the pre-cabled modules until the signal carried by the output control signal up-going link of the pre-cabled module connected to the reader is equal to the second logical value (1220).

## Patentansprüche

1. Multiplexer-System (320) für ein vorverkabeltes Modul (815), das eine Mehrzahl von Antennen aufweist, wobei das Multiplexer-System einen Multiplexer (380) und eine Vorrichtung (385) zum Steuern des Multiplexers aufweist, wobei der Multiplexer das Bilden eines elektrischen Pfads für ein Hochfrequenzsignal zwischen einer Hochfrequenzsignal-Aufwärtsverbindung des Multiplexer-Systems und einer von einer Mehrzahl von Hochfrequenzsignalausgängen des Multiplexer-Systems ermöglicht, wobei das Multiplexer-System **dadurch gekennzeichnet ist, dass** jede der Mehrzahl von Hochfrequenz-Ausgängen die Hochfrequenzsignal-Aufwärtsverbindung des Multiplexer-Systems mit einer der Mehrzahl von Antennen oder mit einer Hochfrequenzsignal-Abwärtsverbindung des vorverkabelten Moduls verbindet, und dadurch, dass die Vorrichtung ein Schieberegister mit einer Mehrzahl von in Reihe miteinander geschalteten Latches (905) aufweist, wobei der Ausgang jedes Latches eines Satzes von Latches der Mehrzahl von Latches mit Steuerbefehlseingängen des Multiplexers verbunden ist, um einen der Mehrzahl von Hochfrequenzsignalausgängen auszuwählen.

2. Multiplexer-System nach Anspruch 1, wobei der Multiplexer eine Mehrzahl von Schaltern (900) aufweist, wobei der Ausgang jedes Latches des Satzes von Latches der Mehrzahl von Latches mit einem Steuerbefehlseingang eines eindeutig zugeordneten Schalters der Mehrzahl von Schaltern verbunden ist.

3. Multiplexer-System nach Anspruch 1 oder Anspruch 2, das ferner mindestens eine Steuersignal-Aufwärtsverbindung (345) und mindestens eine Steuersignal-Abwärtsverbindung (350) aufweist, wobei die mindestens eine Steuersignal-Aufwärtsverbindung eine Eingangssteuersignal-Aufwärtsverbindung aufweist, die mit einem Eingang eines ersten Latches des Satzes von Latches verbunden ist, und die mindestens eine Steuersignal-Abwärtsverbindung eine Ausgangssteuersignal-Abwärtsverbindung aufweist, die mit einem Ausgang eines letzten Latches des Satzes von Latches verbunden ist.

4. Multiplexer-System nach Anspruch 3, wobei die mindestens eine Steuersignal-Aufwärtsverbindung ferner eine Ausgangssteuersignal-Aufwärtsverbindung aufweist, die selektiv mit dem Ausgang des letzten Latches des Satzes von Latches oder mit einer Eingangssteuersignal-Abwärtsverbindung der mindestens einen Steuersignal-Abwärtsverbindung verbunden wird.

5. Multiplexer-System nach Anspruch 4, wobei die Ausgangssteuersignal-Aufwärtsverbindung als eine Funktion eines Zustands einer zweiten Eingangssteuersignal-Abwärtsverbindung der mindestens einen Steuersignal-Abwärtsverbindung selektiv mit dem Ausgang des letzten Latches des Satzes von Latches oder mit der Eingangssteuersignal-Abwärtsverbindung, mit Bezug auf die erste Eingangssteuersignal-Abwärtsverbindung, verbunden wird.

6. Vorverkabeltes Modul für Möbel, das das Multiplexer-System nach einem der vorhergehenden Ansprüche aufweist, wobei das vorverkabelte Modul eine Mehrzahl von Antennen aufweist, wobei jede Antenne der Mehrzahl von Antennen mit einem Ausgang des Multiplexers verbunden ist, wobei die Hochfrequenzsignal-Aufwärtsverbindung des Multiplexer-Systems mit einer Hochfrequenzsignal-Aufwärtsverbindung des vorverkabelten Moduls verbunden ist, wobei einer der Mehrzahl von Hochfrequenzsignalausgängen des Multiplexer-Systems mit einer Hochfrequenzsignal-Abwärtsverbindung des vorverkabelten Moduls verbunden ist.

7. Vorverkabeltes Modul nach Anspruch 6, das mindestens eine leitfähige Platte (300) aufweist, wobei jede der Antennen eine Strahlungselektrode (310) und eine starre Mikrostreifenleitung (330) aufweist, wobei eine Masse-Elektrode jeder der Antennen die mindestens eine leitfähige Platte bildet, wobei jede der Elektroden und die Mikrostreifenleitung jeder Antenne eine geschichtete leitfähige Platte bilden, wobei jede Antenne ferner Befestigungs- und Isoliereinrichtungen (365, 370, 375) zum Befestigen der drei geschichteten Platten und zum elektrischen Verbinden der Strahlungselektrode mit der starren Mikrostreifenleitung aufweist, wobei die Masse-Elektrode von der Strahlungselektrode und der starren Mikrostreifenleitung isoliert ist, wobei die starre Mikrostreifenleitung jeder der Antennen elektrisch mit der Multiplexer-Platte verbunden ist.

8. Anordnung, die eine drahtlose Leseeinrichtung und eine Mehrzahl von vorverkabelten Modulen nach Anspruch 6 oder 7 aufweist, die miteinander verbunden sind, wobei ein vorverkabeltes Modul der Mehrzahl von vorverkabelten Modulen mit der drahtlosen Leseeinrichtung verbunden ist.

9. Verfahren zum Auswählen einer Antenne in einer Anordnung nach Anspruch 8, wobei das Verfahren folgende Schritte beinhaltet:
- Bestimmen eines Konfigurationsparameters der Multiplexer zum Bilden eines elektrischen Pfades für ein Hochfrequenzsignal zwischen der auszuwählenden Antenne und der drahtlosen Leseeinrichtung; und
- Schreiben mindestens eines Teils des Konfigurationsparameters in das Schieberegister des Multiplexer-Systems jedes vorverkabelten Moduls der Anordnung als ein Signal, das an einen ersten Latch des mit der drahtlosen Leseeinrichtung verbundenen vorverkabelten Moduls geschickt wird.

10. Verfahren nach Anspruch 9, das ferner einen Schritt des Verkettens einer Mehrzahl von Konfigurationsunterparametern zum Bestimmen des Konfigurationsparameters beinhaltet, wobei jeder der Konfigurationsunterparameter einem vorverkabelten Modul der Mehrzahl von vorverkabelten Modulen zugeordnet ist.

11. Verfahren nach Anspruch 9 oder Anspruch 10, wobei der Konfigurationsparameter eine Mehrzahl von Bits aufweist, wobei jedes Bit der Mehrzahl von Bits die Auswahl einer Antenne oder mindestens eines vorverkabelten Moduls der Mehrzahl von vorverkabelten Modulen ermöglicht.

12. Verfahren zum Bestimmen der Anzahl von Antennen, die mit einer drahtlosen Leseeinrichtung in einer Anordnung verbunden sind, die eine drahtlose Leseeinrichtung und eine Mehrzahl von vorverkabelten Modulen nach Anspruch 6 oder 7 aufweist, die miteinander verbunden sind, wobei ein vorverkabeltes Modul der Mehrzahl von vorverkabelten Modulen mit der drahtlosen Leseeinrichtung verbunden ist, wobei jedes der vorverkabelten Module der Mehrzahl von vorverkabelten Modulen das Multiplexer-System nach Anspruch 4 aufweist, wobei das Verfahren folgende Schritte beinhaltet
- Rücksetzen (1200) des Schieberegisters des Multiplexer-Systems jedes vorverkabelten Moduls der Anordnung auf einen ersten Logikwert und Voreinstellen einer Variablen, die die Anzahl von Antennen darstellt, auf Null;
- Einstellen (1205) eines Signals, das an einen ersten Latch des mit der Leseeinrichtung verbundenen vorverkabelten Moduls geschickt wird, auf einen zweiten Logikwert; und
- Erhöhen (1215) der Variablen, die die Anzahl von Antennen darstellt, bei jeder steigenden Flanke (1210) eines Taktsignals, das an jeden Latch des vorverkabelten Moduls gesendet wird, bis das Signal, das von der Ausgangssteuersignal-Aufwärtsverbindung des mit der Leseeinrichtung verbundenen vorverkabelten Moduls getragen wird, gleich dem zweiten Logikwert ist (1220).

## Revendications

1. Système multiplexeur (320) pour un module précâblé (815) comprenant une pluralité d'antennes, le système multiplexeur comprenant un multiplexeur (380) et un dispositif (385) pour contrôler le multiplexeur, le multiplexeur permettant l'établissement d'un passage électrique pour un signal haute fréquence entre une liaison montante de signal haute fréquence du système multiplexeur et l'une d'une pluralité de sorties de signal haute fréquence du système multiplexeur, le système multiplexeur étant **caractérisé en ce que** chacune de la pluralité de sorties haute fréquence connecte la liaison montante de signal haute fréquence du système multiplexeur à l'une de la pluralité d'antennes ou à une liaison descendante de signal haute fréquence du module précâblé, et **en ce que** le dispositif comprend un registre à décalage ayant une pluralité de bascules (905) connectées ensemble en série, la sortie de chaque bascule d'un ensemble de bascules de la pluralité de bascules étant connectée à des entrées de commande de contrôle du multiplexeur afin de sélectionner l'une de la pluralité de sorties de signal haute fréquence.

2. Système multiplexeur selon la revendication 1, dans lequel le multiplexeur comprend une pluralité de commutateurs (900), la sortie de chaque bascule de l'ensemble de bascules de la pluralité de bascules étant connectée à une entrée de commande de contrôle d'un commutateur distinct de la pluralité de commutateurs.

3. Système multiplexeur selon la revendication 1 ou la revendication 2 comprenant en outre au moins une liaison montante de signal de contrôle (345) et au moins une liaison descendante de signal de contrôle (350), la au moins une liaison montante de signal de contrôle comprenant une liaison montante de signal de contrôle d'entrée connectée à une entrée d'une première bascule de l'ensemble de bascules et la au moins une liaison descendante de signal de contrôle comprenant une liaison descendante de signal de contrôle de sortie connectée à une sortie d'une dernière bascule de l'ensemble de bascules.

4. Système multiplexeur selon la revendication 3, dans lequel la au moins une liaison montante de signal de contrôle comprend en outre une liaison montante de signal de contrôle de sortie connectée de manière sélective à la sortie de la dernière bascule de l'ensemble de bascules ou à une liaison descendante de signal de contrôle d'entrée de la au moins une liaison descendante de signal de contrôle.

5. Système multiplexeur selon la revendication 4, dans lequel la liaison montante de signal de contrôle de sortie est connectée de manière sélective à la sortie de la dernière bascule de l'ensemble de bascules ou à la liaison descendante de signal de contrôle d'entrée, désignée comme étant la première liaison descendante de signal de contrôle d'entrée, en fonction d'un état d'une seconde liaison descendante de signal de contrôle d'entrée de la au moins une liaison descendante de signal de contrôle.

6. Module précâblé pour meubles comprenant le système multiplexeur selon l'une quelconque des revendications précédentes, le module précâblé comprenant une pluralité d'antennes, chaque antenne de la pluralité d'antennes étant connectée à une sortie du multiplexeur, la liaison montante de signal haute fréquence du système multiplexeur étant connectée à une liaison montante de signal haute fréquence du module précâblé, l'une de la pluralité de sorties de signal haute fréquence du système multiplexeur étant connectée à une liaison descendante de signal haute fréquence du module précâblé.

7. Module précâblé selon la revendication 6 comprenant au moins une plaque conductrice (300), chacune des antennes comprenant une électrode de radiation (310) et une ligne microbande (330) rigide, une électrode de masse de chacune des antennes étant la au moins une plaque conductrice, chacune des électrodes et la ligne microbande de chaque antenne formant une plaque conductrice en couche, chaque antenne comprenant en outre des moyens de fixation et d'isolation (365, 370, 375) pour maintenir les trois plaques en couche et pour connecter électriquement l'électrode de radiation à la ligne microbande rigide, l'électrode de masse assurant l'isolation par rapport à l'électrode de radiation et la ligne microbande rigide, la ligne microbande rigide de chacune des antennes étant connectée électriquement à la carte de multiplexage.

8. Ensemble comprenant un lecteur sans fil et une pluralité de modules précâblés selon la revendication 6 ou la revendication 7, connectés ensemble, un module précâblé de la pluralité de modules précâblés étant connecté au lecteur sans fil.

9. Procédé pour la sélection d'une antenne dans un ensemble selon la revendication 8, le procédé comprenant les étapes consistant à :
- déterminer un paramètre de configuration des multiplexeurs afin d'établir un passage électrique pour un signal haute fréquence entre l'antenne à sélectionner et le lecteur sans fil ; et
- écrire au moins une partie du paramètre de configuration dans le registre à décalage du système multiplexeur de chaque module précâblé de l'ensemble sous forme de signal envoyé à une première bascule du module précâblé connecté au lecteur sans fil.

10. Procédé selon la revendication 9 comprenant en outre une étape consistant à concaténer une pluralité de sous-paramètres de configuration afin de déterminer le paramètre de configuration, chacun des sous-paramètres de configuration étant associé à un module précâblé de la pluralité de modules précâblés.

11. Procédé selon la revendication 9 ou la revendication 10, dans lequel le paramètre de configuration comprend une pluralité de bits, chaque bit de la pluralité de bits permettant la sélection d'une antenne ou d'au moins un module précâblé de la pluralité de modules précâblés.

12. Procédé pour la détermination du nombre d'antennes connectées à un lecteur sans fil dans un ensemble comprenant un lecteur sans fil et une pluralité de modules précâblés selon la revendication 6 ou la revendication 7, connectés ensemble, un module précâblé de la pluralité de modules précâblés étant connecté au lecteur sans fil, chacun des modules précâblés de la pluralité de modules précâblés comprenant le système multiplexeur selon la revendication 4, le procédé comprenant les étapes consistant à _{:}
- réinitialiser (1200) à une première valeur logique le registre à décalage du système multiplexeur de chaque module précâblé de l'ensemble et initialiser une variable représentant le nombre d'antennes à zéro ;
- régler (1205) un signal envoyé à une première bascule du module précâblé connecté au lecteur à une seconde valeur logique ; et
- incrémenter (1215) la variable représentant le nombre d'antennes à chaque front montant (1210) d'un signal d'horloge transmis à chaque bascule des modules précâblés jusqu'à ce que le signal transporté par la liaison montante de signal de contrôle de sortie du module précâblé connecté au lecteur soit égal à la seconde valeur logique (1220).
